# EUROPEAN PATENT SPECIFICATION

(11) **EP 3 841 310 B1**
(45) Date of publication and mention of the grant of the patent: **14.12.2022**
(21) Application number: 20734831.9
(22) Date of filing: 12.06.2020
(51) Int. Cl.: F16D 23/06

(54) **STRUT HOLDER FOR SYNCHRONIZATION PACKS**
STREBENHALTERUNG FÜR SYNCHRONISATIONSPACKUNGEN
SUPPORT D'ENTRETOISE POUR ENSEMBLES DE SYNCHRONISATION

(30) Priority: 14.06.2019 US 201962861422 P
(43) Date of publication of application: 30.06.2021
(73) Proprietor: Eaton Intelligent Power Limited, Dublin 4 (IE)
(72) Inventor: FERNANDEZ, Josevaldo Roberto, Salto, Sao Paulo 13320-040 (BR); BIAGIO, Guilherme Gallo, Louveira, Sao Paulo 13290-000 (BR)
(74) Representative: Novagraaf Group
(86) International application number: PCT/EP2020/025282
(87) International publication number: WO 2020/249266

(56) References cited:
- DE-A1-102007 040 438
- DE-A1-102016 210 660
- DE-A1-102018 124 573
- JP-A- 2010 127 358

## Description

### Field

This invention provides a strut holder in the form of a clip configured to position a gear selection strut in a synchronizer. A synchronizer can comprise a clip positioned between a sleeve and a blocker ring, the clip coupled to a gear selection strut. The strut holder can configure a 2-way synchronizer as a 1-way synchronizer or it can configure a 1-way synchronizer with a light-weighted design.

### Background

A synchronizer pack can comprise a strut that is pressed and slid-upon when a sleeve of the synchronizer moves to engage a gear. To form a 1-way synchronizer, permanent modifications are ordinarily made to the strut, such as discussed in US 5,211,068, where snap rings and sheet metal retainers require additional machining and other modification steps involve the re-design of the strut itself.

In DE 10 2016 210660 A1 there is disclosed a strut-holding clip as it is defined in the pre-characterizing portion of claim 1.

### SUMMARY

It is desired to have one stock synchronizer that can be configured as either a 2-way synchronizer or as an 1-way synchronizer without having to machine the synchronizer and without having to replace the strut when converting the synchronizer from one type to the other.

A strut-holding clip can comprise an end wall configured to block a gear selection strut from travelling. A first leg and a second leg extend from the end wall. The first leg and the second leg are configured to straddle the gear selection strut. A first prong is configured to flex within the first leg. The first prong terminates in a first barb. A second prong is configured to flex within the second leg. The second prong terminates in a second barb. A first foot is angled with respect to the first leg and is configured to elastically oppose the first barb. A second foot is angled with respect to the second leg and is configured to elastically oppose the second barb.

A synchronizer can be configured with the strut-holding clip. The synchronizer can be for coupling at least one gear to a hub. The synchronizer can comprise a hub seating a gear selection strut in a strut slot. The hub can be centered about a center line. The center line can comprise a center point in-line with the gear selection strut. The hub comprises a synchronized side wall on a first side of the center point and a non-synchronized side wall on a second side of the center point. The hub can comprise external teeth adjoining the strut slot. A sleeve can surround the hub. The sleeve can be configured to slide back and forth along a first portion of the center line on the first side of the center point. The sleeve can comprise inner teeth configured to engage the external teeth of the hub. The sleeve can be configured to slide to select a first gear adjoining the first side of the hub. The sleeve can be further configured to slide to select a second gear adjoining the second side of the hub. A strut-holding clip is coupled to the gear selection strut. The strut-holding clip can comprise an end wall on the second side of the center point near the non-synchronized side wall. The end wall can be configured to block the gear selection strut from travelling through the non-synchronized side wall. A first leg and a second leg extend from the end wall. The first leg and the second leg straddle the gear selection strut. A first foot is angled with respect to the first leg to adjoin the synchronized side wall. A second foot is angled with respect to the second leg to adjoin the synchronized side wall.

A transmission can comprise a synchronizer disclosed herein. The transmission can further comprise a blocker ring and a dog body along the center line on the second side of the center point. A gear for coupling to the sleeve can also be along the center line on the first side of the center point. The transmission can alternatively comprise a second blocker ring and a second dog body along the center line on the first side of the center point and a second gear for coupling to the sleeve along the center line on the second side of the center point.

Additional objects and advantages will be set forth in part in the description which follows, and in part will be obvious from the description, or may be learned by practice of the disclosure. The objects and advantages will also be realized and attained by means of the elements and combinations particularly pointed out in the appended claims.

### BRIEF DESCRIPTION OF THE DRAWINGS

Figure 1A is a cross-section view of PRIOR ART two-sided synchronizer.
Figure 1B is a view of a PRIOR ART sleeve and a hub with a strut of a strut holder.
Figure 2A is cross-section view of a two-sided synchronizer with a strut-holding clip.
Figure 2B is cross-section view of a modified two-sided synchronizer with a strut-holding clip.
Figure 3 is a cross-section view of a one-sided synchronizer.

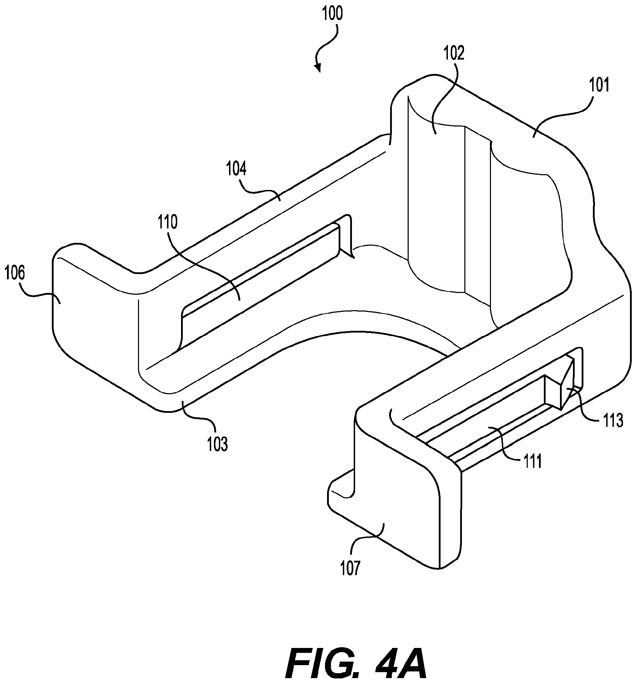

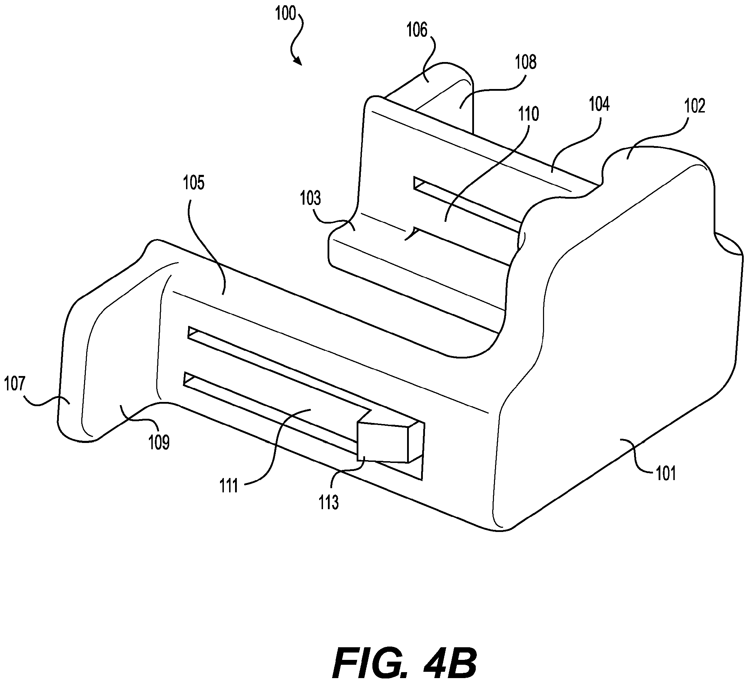

Figures 4A & 4B are views of a strut-holding clip.

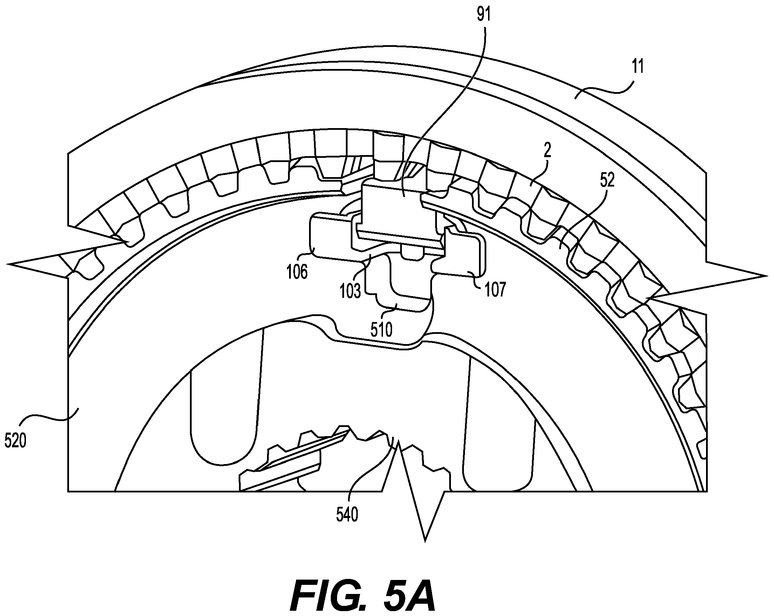

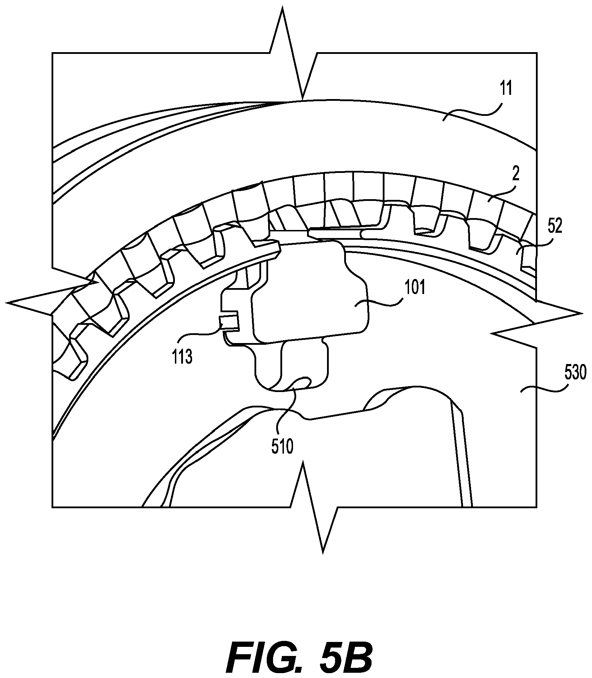

Figures 5A & 5B are synchronized side and non-synchronized side views of a hub and sleeve with the strut-holding clip installed.

### DETAILED DESCRIPTION

Reference will now be made in detail to the examples which are illustrated in the accompanying drawings. Wherever possible, the same reference numbers will be used throughout the drawings to refer to the same or like parts. Directional references such as "left" and "right" are for ease of reference to the figures.

A strut holder can be in the form of a clip. The strut-holding clip 100 can work as a barrier to prevent the strut 9 from moving axially toward a position that is non-synchronized. The motion to be prevented normally occurs with shifting a gear or when disengaging an opposite gear.

The clip 100 can be used in many kinds of transmissions, including light duty, medium duty, and heavy duty transmissions. It can also be used in manual and automated transmissions ("AMT").

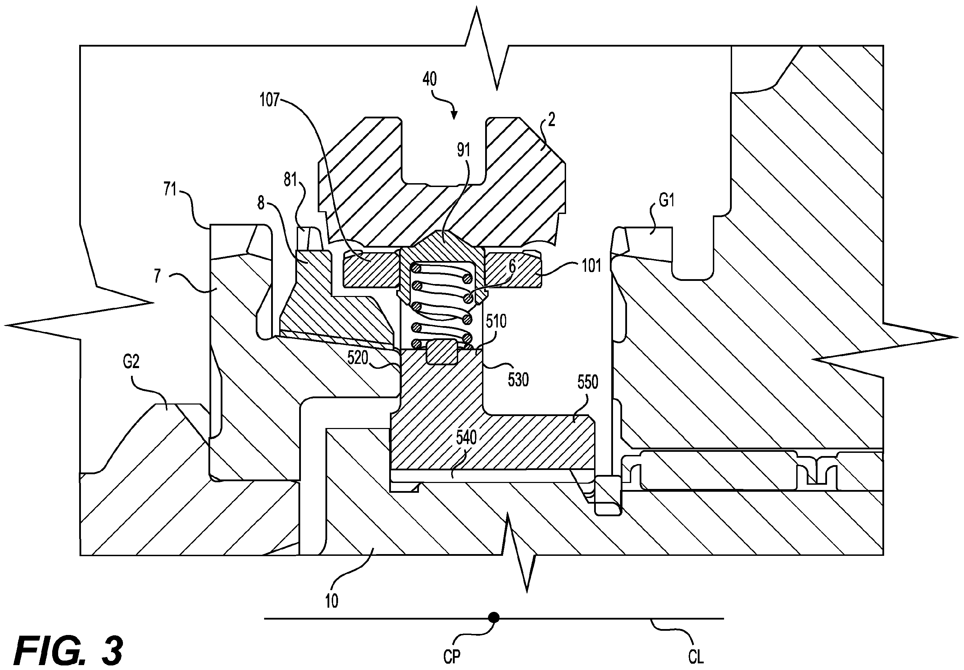

The clip 100 can be used in regular fixed hub arrangements and can be used without a geometry change to the hub 5 itself or to the strut 9 itself. It allows a stock two-way synchronizer 1 to be converted to a one-way synchronizer 20 or 30 without a geometry change to the hub 5 itself or to the strut 9 itself. It also allows for a transmission having synchronized and non-synchronized gear pairs in the same transmission. So, a synchronizer can have a single side synchronized (like Figure 3) while another synchronizer in the same transmission has two sides synchronized.

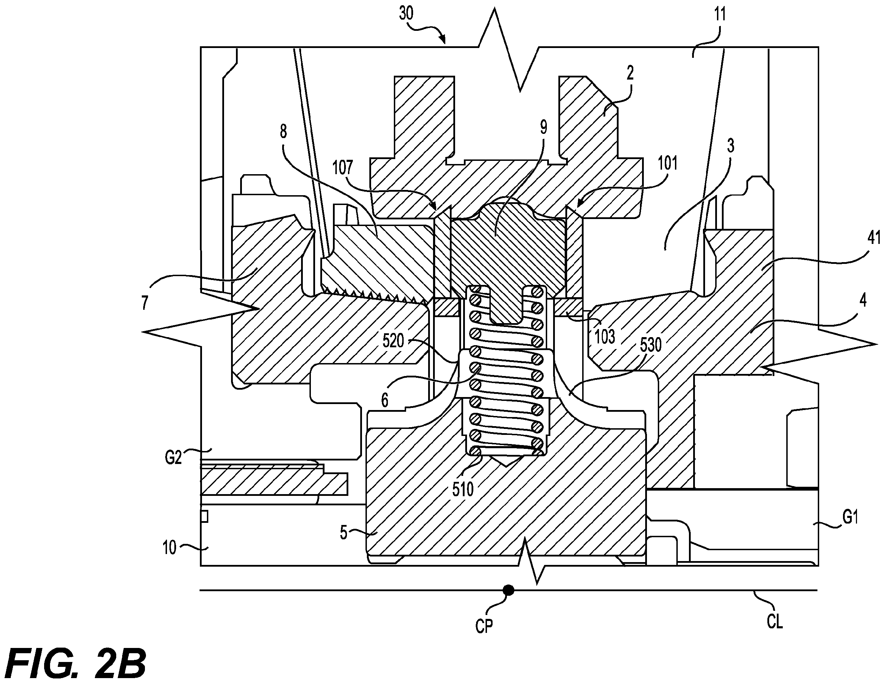

A strut-holding clip 100 placed in strut slots 51 allows use of regular fixed hubs in arrangements where one side is synchronized. The clip 100 prevents the strut from jumping out in such constructions without the need of incorporating specific features at the hub. The hub can also be light weighted as in Figure 2B.

The strut-holding clip 100 can comprise a polymeric part that is placed in existing strut slots 51 in the hub 5. A strut-holding clip 100 according to the invention comprises an end wall 101 configured to block a gear selection strut 9 from travelling out of the strut-holding clip 100. The end wall 101 can be ribbed with ribs 102 for strength or for controlling the elastic properties of the polymeric part. According to the invention a first leg 104 and a second leg 105 extend from the end wall 101. The first leg 104 and the second leg 105 are configured to straddle the gear selection strut 9. The strut cap 91 can seat against a strut-guiding rim 103 traversing an inner perimeter of the strut-holding clip 101. A roller ball or other strut cap configuration can be accommodated by adjusting the strut-guiding rim 103. According to the invention first prong 110 is configured to flex within the first leg 104.
The first prong terminates in a first barb. A second prong 111 is configured to flex within the second leg 105. The second prong 111 terminates in a second barb 113 that mirrors the first barb. A first foot 106 is angled with respect to the first leg 104 and is configured to elastically oppose the first barb. A second foot 107 is angled with respect to the second leg 105 and is configured to elastically oppose the second barb 113. A first surface 108 of the first foot 106 and a second surface 109 of the second foot 107 are designed to face portions of the synchronized side 520 of the hub 5. The first and second barbs can catch against the non-synchronized side wall 530. Then it can be said that the combination of the first and second barbs and first and the second foot surfaces are configured with a spring force to grip the hub 5 in a way that prevents the strut-holding clip 100 from moving.

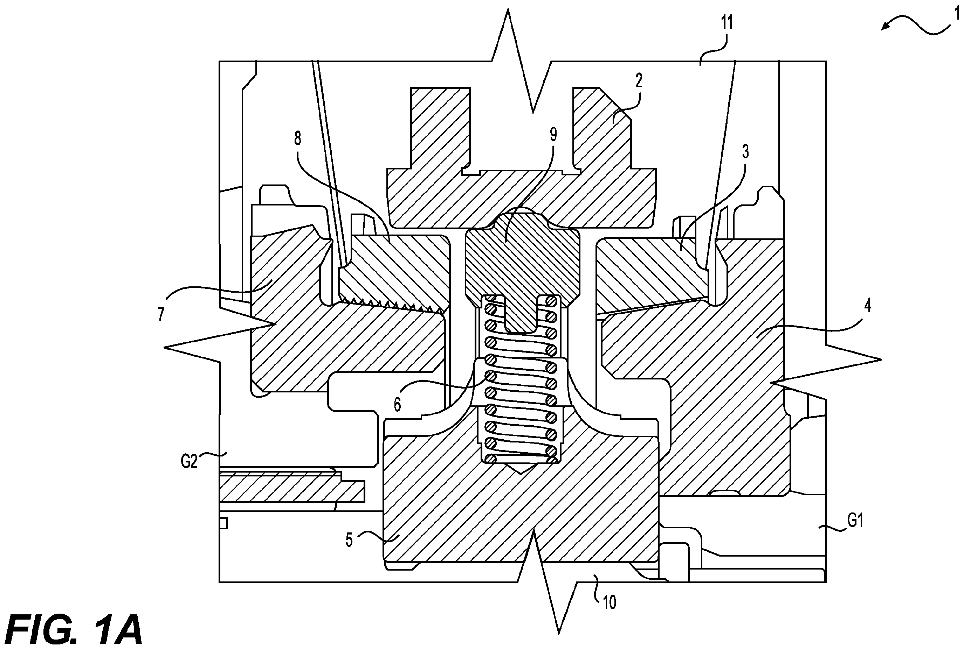

In Figure 1A, the synchronizer 1 is a Baulk ring type or strut type synchronizer. In a standard construction, there are synchronization features on both sides of the strut 9. The strut 9 is biased by a spring 6 in a hub 5 that is coupled to a main shaft 10. The right side of the assembly could synchronize with, for example, 5th gear G1, and the left side could synchronize with, for example, reverse gear G2. The dog body 4, 7 and blocker rings 3, 8 prevent the strut 9 from popping out of the assembly and also axially position the assembly. The sleeve 2 moves left or right to synchronize the Baulk ring 11 with the 5th or reverse gear G1, G2, as selected. The sleeve 2 pushes on the strut 9 when sliding.

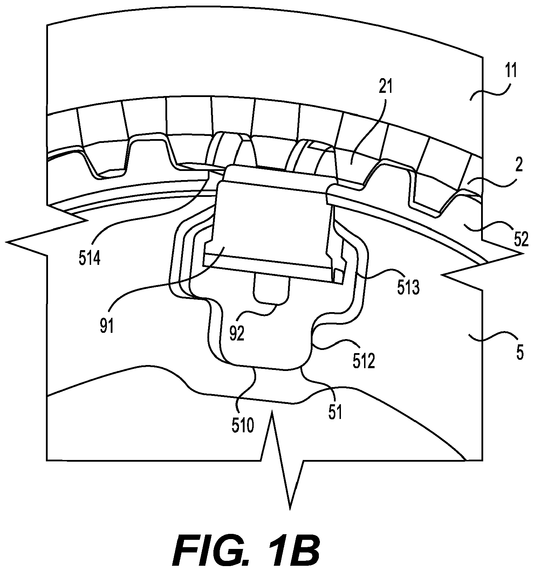

In Figure 1B, strut cap 91 of the gear selection strut 9 is shown in the strut slot 51 of the hub 5. The meshing teeth 21, 52 between the sleeve 2 and the hub 5 can be seen, and the Baulk ring 11 is shown surrounding the sleeve 2. The strut slot 51 can comprise a spring seat 510 for spring 6, spring guiding walls 512, and a strut cap opening 513. The strut cap 91 can comprise a spring guide 92. The strut cap 91 can optionally seat a roller or comprise an integrally-formed roller surface. The strut cap 91 can protrude in a tooth gap 514 in the circumference of the hub 5 so that the roller or roller surface is accessible to the strut 2 for the sliding function.

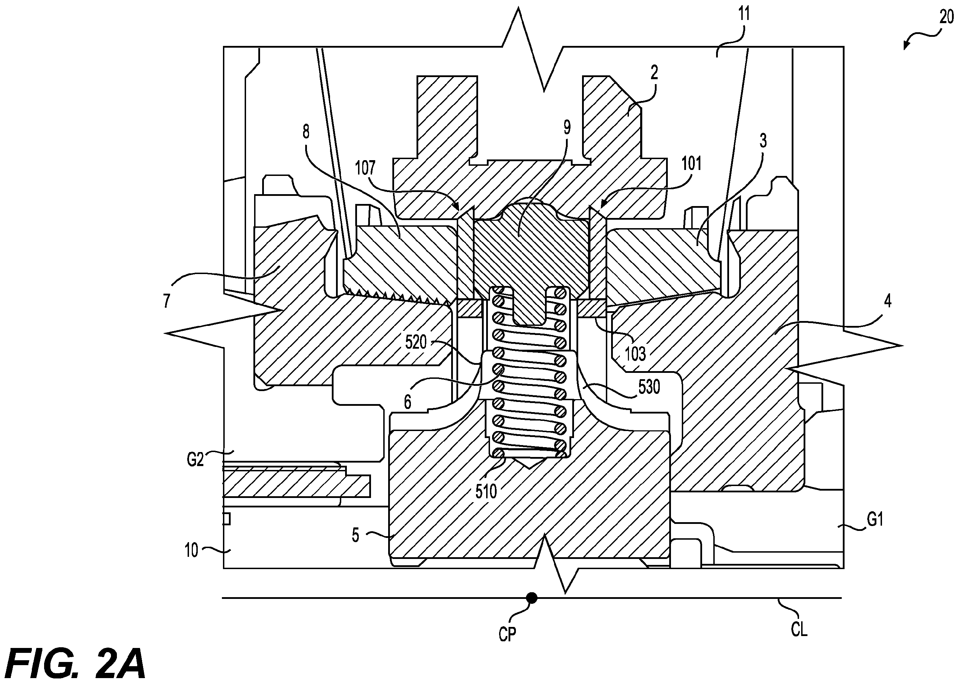

The strut-holding clip 101 can be used to convert a two-sided synchronizer 1 to a single-sided synchronizer 20 or 30. So, a synchronizer can be designed so that it can be installed as either a one-sided or dual sided synchronizer. A single stock synchronizer can then be customized using the strut-holding clip 100 during installation. During install, the strut-holding clip 100 can be used to configure a two-way synchronizer for a one-sided synchronization. This can permit the same stock item to enable two install configurations. For example, the same package can be used for a synchronized reverse install or a non-synchronized reverse install. Figures 2A & 2B are exemplary of this.

In Figure 2A, the two-sided synchronizer has the strut-holding clip 100 installed with the foot end, comprising foot 107, facing the second gear G2. Second gear will continue to be used in synchronization with the sleeve 2. The head end, comprising end wall 101, is on the non-synchronized side of the center point CP. First gear G1 will not be used. The blocker ring 3 and dog body 4 can remain in the assembly to axially position the synchronizer 20 along the center line CL.

In Figure 2B, the two-sided synchronizer has the strut-holding clip 100 installed much like Figure 2A, and those details are incorporated from above. Because the end wall 101 will prevent right-ward movement of the strut 9, light weighting can be done. The installer could remove the blocker ring 3 and save weight. The installer could also switch to a lighter dog body 41. The lighter dog body 41 is included to axially position the synchronizer and ensure the desired location with respect to center point CP and center line CL. But, a bulky corner of the dog body 41 can be omitted. Comparing to Figure 2A, a lower right chunk of the dog body 4 is removed to result in dog body 41.

When implementing single-side synchronization from the outright, a different design can be used with lighter parts. Figure 3 shows that the right side does not need to synchronize with first gear G1 because the design has some other part performing that synchronization. But, the second gear G2 is synchronized. So the dog body 7 and blocker ring 8 remain on the left side of hub 5 to get axial placement and position the strut 9. The sleeve 2, via its toothed configuration 21 can slide across the coupling teeth 71, 81 as customary, and dog body 7 can be coupled to second gear G2. With the strut-holding clip 100 installed, the end wall 101 prevents the strut 9 from travelling away from the center point CP along center line CL in the direction of the first gear G1. The dog body and blocker ring are eliminated on the non-synchronized side 530 on the right side of Figure 3. In order to maintain axial placement of the synchronizer 40 along the center line CL, the hub can be modified to include a protrusion 550. The protrusion 550 can be lighter than the dog body and blocker ring that would otherwise occupy the axial space.

Using the strut-holding clip 100 can also permit another embodiment of the elimination of the second instance of the dog body and blocker ring. Because the strut-holding clip 100 prevents the strut 9 from popping out towards the transmission, the strut-holding clip 100 can be used when the blocker ring and dog body are not needed to be in between the hub 5 and the first gear G1. The sleeve 2 can push on the strut-holding clip 100 to slide and synchronize to the first gear G1 on the far right, and the strut-holding clip 100 holds the strut in place.

A synchronizer 20, 30, 40 according to the invention is configured with the strut-holding clip 100. The synchronizer 20, 30, 40 can be for coupling at least one gear G1 or G2 to a hub 5. The synchronizer comprises a hub 5 seating a gear selection strut 9 in a strut slot 51. The hub 5 is centered on a center line CL. The center line CL comprises a center point CP in-line with the gear-selection strut 9. The hub 5 comprises a synchronized side wall 520 on a first side of the center point CP and a non-synchronized side wall 530 on a second side of the center point CP. The hub 5 comprises external teeth 52 adjoining the strut slot 51. A sleeve 2 surrounds the hub 5. The sleeve 2 is configured to slide back and forth along a first portion of the center line CL on the first side of the center point CP. The sleeve 2 comprises inner teeth 21 configured to engage the external teeth 52 of the hub 5. The sleeve 2 can be configured to slide to select a first gear G1 adjoining the first side of the hub 5. The sleeve 2 can be further configured to slide to select a second gear G2 adjoining the second side of the hub 5. A strut-holding clip 100 is coupled to the gear selection strut 9. The strut-holding clip 9 comprises an end wall 101 on the second side of the center point CP near the non-synchronized side wall 530. The end wall 101 is configured to block the gear selection strut 9 from travelling through the non-synchronized side wall 530. A first leg 104 and a second leg extend 105 from the end wall 101. The first leg 104 and the second leg 105 straddle the gear selection strut 9. A first foot 106 is angled with respect to the first leg 104 to adjoin a portion of the synchronized side wall 520. A second foot 107 is angled with respect to the second leg 105 to adjoin another portion of the synchronized side wall 520.

The strut-holding clip 100 is configured so that the first leg 104 comprises a first barbed prong 110 configured to flex against the strut slot 51. A portion of the strut slot 51 can comprise a strut cap opening 513 that typically seats a roller, slider pad, or other sliding surface of the strut 9. A strut-guiding rim 103 can traverse an inner perimeter of the strut-holding clip 100 to provide additional guidance to the strut 9. A first barb on the first barbed prong 110 adjoins the non-synchronized side wall 530. The second leg 105 comprises a second barbed prong 111 configured to similarly flex against the strut slot 51. A second barb 113 on the second barbed prong 111, that mirrors the first barb on the first barbed prong 110, also adjoins the non-synchronized side wall 530. The first barbed prong and the first foot 106 can be configured with a spring force to grip the synchronized side wall 520 and the non-synchronized side wall 530 so that the strut-holding clip 100 does not move. The strut-holding clip 100 can be configured to apply a spring force in the strut slot 51 as by flexing the first leg 104 and the second leg 105 with respect to the end wall 101. The end wall can comprise inner ribs 102, which can be configured for tailoring strength and spring forces. The composition of the polymeric material of the strut-holding clip can be tailored likewise for strength, durability, and elastic properties.

It can be possible that the strut 9 can travel towards the feet 106, 107 of the strut-holding clip 100, but the end wall 101 and spring forces prevent the strut 9 from travelling past the non-synchronized side wall 530 having the end wall 101.

Because it is desired to avoid scrap, it can be possible to remove the strut-holding clip. Then, the synchronizer can be re-used. This is a departure from prior art devices where the strut is redesigned for use as either one-way or two-way synchronization, and it is a departure from designs that alter the geometry of the hub with machining or permanent installments to convert from one-way or two-way synchronization.

A transmission can be affiliated with main shaft 10. The transmission according to the invention comprises a synchronizer 20, 30, 40 as disclosed herein. The transmission is further comprising a blocker ring 3 or 8 and a dog body 4 or 7 along the center line CL on one of the sides of the center point CP. A gear G1 or G2 for coupling to the sleeve is also along the center line CL on the first side or second side of the center point CP. The transmission can alternatively comprise a second blocker ring and a second dog body along the center line on the first side or on the second side of the center point and a second gear for coupling to the sleeve along the center line on the first side or the second side of the center point. The strut-holding clip 100 can be positioned between the sleeve 2 and one of the blocker rings 3 or 8.

## Claims

1. A strut-holding clip (100), comprising:
an end wall (101);
a first leg (104) and a second leg (105) extending from the end wall (101), the first leg and the second leg configured to straddle the gear selection strut (9);
a first prong (110) configured to flex within the first leg (104);
a second prong (111) configured to flex within the second leg (105);
**characterized in that**
the end wall (101) is configured to block a gear selection strut (9) from travelling;
the first prong (110) terminates in a first barb;
the second prong (111) terminates in a second barb (113);
the strut-holding clip (100) further comprising:
a first foot (106) angled with respect to the first leg (104) and configured to elastically oppose the first barb; and
a second foot (107) angled with respect to the second leg (105) and configured to elastically oppose the second barb (113).

2. The strut-holding clip of claim 1, further comprising a strut-guiding rim (103) traversing an inner perimeter of the clip (100).

3. A synchronizer (20, 30, 40) for coupling at least one gear (G1, G2) to a hub (5), comprising:
a hub seating a gear selection strut (9) in a strut slot (51), the hub (5) being centered about a center line (CL), the center line comprising a center point (CP) in-line with the gear selection strut (9), the hub (5) comprising a synchronized side wall (529) on a first side of the center point and a non-synchronized side wall (530) on a second side of the center point, and the hub (5) comprising external teeth (52) adjoining the strut slot (51);
a sleeve (2) surrounding the hub (5), the sleeve (2) configured to slide back and forth along a first portion of the center line (CL) on the first side of the center point (CP), the sleeve (2) comprising inner teeth (21) configured to engage the external teeth (52) of the hub (5); and
a strut-holding clip (100) coupled to the gear selection strut (9), the strut-holding clip (100) comprising an end wall (101) on the second side of the center point near the non- synchronized side wall (530), the end wall configured to block the gear selection strut from travelling through the non-synchronized side wall (530); a first leg (104) and a second leg (105) extending from the end wall (101), the first leg and the second leg straddling the gear selection strut (9); a first prong (110) configured to flex within the first leg (104), the first prong (110) terminates in a first barb; a second prong (111) configured to flex within the second leg (105), the second prong (111) terminates in a second barb (113); a first foot (106) angled with respect to the first leg (104) to adjoin the synchronized side wall (529); and
a second foot (107) angled with respect to the second leg (105) to adjoin the synchronized side wall (529).

4. The synchronizer of claim 3, wherein the first leg (104) comprises a first barbed prong (110) configured to flex against the strut slot, and wherein a first barb on the first barbed prong adjoins the non-synchronized side wall.

5. The synchronizer of claim 4, wherein the second leg (105) comprises the second barbed prong (111) configured to flex against the strut slot (51), and wherein the second barb (113) on the second barbed prong (111) adjoins the non-synchronized side wall (530).

6. The synchronizer of claim 4, wherein the first barbed prong (110) and the first foot (106) are configured with a spring force to grip the synchronized side wall (529) and the non- synchronized side wall (530).

7. The synchronizer of any one of claims 3-6, wherein the strut-holding clip (100) is configured to apply a spring force in the strut slot (51) as by flexing the first leg (104) and the second leg (105) with respect to the end wall (101).

8. The synchronizer of any one of claims 3-6, further comprising a strut-guiding rim (103) traversing an inner perimeter of the strut-holding clip (101).

9. The synchronizer of any one of claims 3-6, wherein the end wall (101) comprises inner ribs (102).

10. The synchronizer of any one of claims 3-6, wherein the strut-holding clip (100) is polymeric.

11. The synchronizer of any one of claims 3-6, wherein the strut-holding clip (100) is removable.

12. A transmission comprising the synchronizer (20, 30, 40) of claim 3, the transmission further comprising:
a blocker ring (3; 8) and a dog body (4; 7) along the center line (CL) on the second side of the center point (CP) ; and
a gear (G1, G2) for coupling to the sleeve (2) along the center line (CL) on the first side of the center point (CP).

13. The transmission of claim 12, further comprising:
a second blocker ring and a second dog body along the center line (CL) on the first side of the center point (CP); and a second gear for coupling to the sleeve (2) along the center line on the second side of the center point.

14. The transmission of claim 12, wherein the strut-holding clip (100) is positioned between the sleeve (2) and the blocker ring (3; 8).

15. The transmission of claim 13, wherein the strut-holding clip (100) is positioned between the sleeve (2) and the second blocker ring.

## Patentansprüche

1. Strebenhalteklemme (100), umfassend:
eine Endwand (101);
einen ersten Schenkel (104) und einen zweiten Schenkel (105), die sich aus der Endwand (101) erstrecken, wobei der erste Schenkel und der zweite Schenkel konfiguriert sind, um die Gangwahlstrebe (9) zu spreizen;
einen ersten Stift (110), der konfiguriert ist, um sich innerhalb des ersten Schenkels (104) zu biegen;
einen zweiten Stift (111), der konfiguriert ist, um sich innerhalb des zweiten Schenkels (105) zu biegen;
**dadurch gekennzeichnet, dass**
die Endwand (101) konfiguriert ist, um eine Gangwahlstrebe (9) zu blockieren, sich zu bewegen;
der erste Stift (110) in einem ersten Widerhaken endet;
der zweite Stift (111) in einem zweiten Widerhaken (113) endet;
die Strebenhalteklemme (100) ferner umfassend:
einen ersten Fuß (106), der hinsichtlich des ersten Schenkels (104) abgewinkelt und konfiguriert ist, um dem ersten Widerhaken elastisch entgegenzuwirken; und
einen zweiten Fuß (107), der hinsichtlich des zweiten Schenkels (105) abgewinkelt und konfiguriert ist, um dem zweiten Widerhaken (113) elastisch entgegenzuwirken.

2. Strebenhalteklemme nach Anspruch 1, ferner umfassend einen Strebenführungsrand (103), der einen Innenumfang der Klemme (100) durchquert.

3. Synchronisiereinrichtung (20, 30, 40) zum Koppeln mindestens eines Gangs (G1, g2) mit einer Nabe (5), umfassend:
eine Nabe, die eine Gangwahlstrebe (9) in einem Strebenschlitz (51) aufnimmt, wobei die Nabe (5) um eine Mittellinie (CL) herum zentriert ist, die Mittellinie umfassend einen Mittelpunkt (CP) in Reihe mit der Gangwahlstrebe (9), die Nabe (5) umfassend eine synchronisierte Seitenwand (529) auf einer ersten Seite des Mittelpunkts und eine nicht synchronisierte Seitenwand (530) auf einer zweiten Seite des Mittelpunkts, und die Nabe (5) umfassend äußere Zähne (52), die an den Strebenschlitz (51) angrenzen;
eine Hülse (2), die die Nabe (5) umgibt, wobei die Hülse (2) konfiguriert ist, um entlang eines ersten Abschnitts der Mittellinie (CL) auf der ersten Seite des Mittelpunkts (CP) hin und her zu gleiten, die Hülse (2) umfassend innere Zähne (21), die konfiguriert sind, um die äußeren Zähne (52) der Nabe (5) in Eingriff zu nehmen; und
eine Strebenhalteklemme (100), die mit der Gangwahlstrebe (9) gekoppelt ist, die Strebenhalteklemme (100) umfassend
eine Endwand (101) auf der zweiten Seite des Mittelpunkts nahe der nicht synchronisierten Seitenwand (530), wobei die Endwand konfiguriert ist, um die Gangwahlstrebe zu blockieren, sich durch die nicht synchronisierte Seitenwand (530) zu bewegen; einen ersten Schenkel (104) und einen zweiten Schenkel (105), die sich aus der Endwand (101) erstrecken, wobei der erste Schenkel und der zweite Schenkel die Gangwahlstrebe (9) spreizen; einen ersten Stift (110), der konfiguriert ist, um sich innerhalb des ersten Schenkels (104) zu biegen, wobei der erste Stift (110) in einem ersten Widerhaken endet; einen zweiten Stift (111), der konfiguriert ist, um sich innerhalb des zweiten Schenkels (105) zu biegen, wobei der zweite Stift (111) in einem zweiten Widerhaken (113) endet;
einen ersten Fuß (106), der hinsichtlich des ersten Schenkels (104) abgewinkelt ist, um an die synchronisierte Seitenwand (529) anzugrenzen; und
einen zweiten Fuß (107), der hinsichtlich des zweiten Schenkels (105) abgewinkelt ist, um an die synchronisierte Seitenwand (529) anzugrenzen.

4. Synchronisiereinrichtung nach Anspruch 3, wobei der erste Schenkel (104) einen ersten Stift (110) mit Widerhaken umfasst, der konfiguriert ist, um sich gegen den Strebenschlitz zu biegen, und wobei ein erster Widerhaken auf dem ersten Stift mit Widerhaken an die nicht synchronisierte Seitenwand angrenzt.

5. Synchronisiereinrichtung nach Anspruch 4, wobei der zweite Schenkel (105) den zweiten Stift (111) mit Widerhaken umfasst, der konfiguriert ist, um sich gegen den Strebenschlitz (51) zu biegen, und wobei der zweite Widerhaken (113) auf dem zweiten Stift (111) mit Widerhaken an die nicht synchronisierte Seitenwand (530) angrenzt.

6. Synchronisiereinrichtung nach Anspruch 4, wobei der erste Stift (110) mit Widerhaken und der erste Fuß (106) mit einer Federkraft konfiguriert sind, um die synchronisierte Seitenwand (529) und die nicht synchronisierte Seitenwand (530) zu greifen.

7. Synchronisiereinrichtung nach einem der Ansprüche 3 bis 6, wobei die Strebenhalteklemme (100) konfiguriert ist, um eine Federkraft in dem Strebenschlitz (51) wie durch Biegen des ersten Schenkels (104) und des zweiten Schenkels (105) hinsichtlich der Stirnwand (101) aufzubringen.

8. Synchronisiereinrichtung nach einem der Ansprüche 3 bis 6, ferner umfassend einen Strebenführungsrand (103), der einen Innenumfang der Strebenhalteklemme (101) durchquert.

9. Synchronisiereinrichtung nach einem der Ansprüche 3 bis 6, wobei die Endwand (101) innere Rippen (102) umfasst.

10. Synchronisiereinrichtung nach einem der Ansprüche 3 bis 6, wobei die Strebenhalteklemme (100) polymer ist.

11. Synchronisiereinrichtung nach einem der Ansprüche 3 bis 6, wobei die Strebenhalteklemme (100) abnehmbar ist.

12. Getriebe, umfassend die Synchronisiereinrichtung (20, 30, 40) nach Anspruch 3, das Getriebe ferner umfassend:
einen Blockierring (3; 8) und einen Spannbackenkörper (4; 7) entlang der Mittellinie (CL) auf der zweiten Seite des Mittelpunkts (CP); und
ein Gang (G1, G2) zum Koppeln mit der Hülse (2) entlang der Mittellinie (CL) auf der ersten Seite des Mittelpunkts (CP).

13. Getriebe nach Anspruch 12, ferner umfassend:
einen zweiten Blockierring und einen zweiten Spannbackenkörper entlang der Mittellinie (CL) auf der ersten Seite des Mittelpunkts (CP); und ein zweiter Gang zum Koppeln mit der Hülse (2) entlang der Mittellinie auf der zweiten Seite des Mittelpunkts.

14. Getriebe nach Anspruch 12, wobei die Strebenhalteklemme (100) zwischen der Hülse (2) und dem Blockierring (3; 8) positioniert ist.

15. Getriebe nach Anspruch 13, wobei die Strebenhalteklemme (100) zwischen der Hülse (2) und dem zweiten Blockierring positioniert ist.

## Revendications

1. Attache de maintien de jambe (100), comprenant :
une paroi d'extrémité (101) ;
une première branche (104) et une deuxième branche (105) s'étendant à partir de la paroi d'extrémité (101), la première branche et la deuxième branche configurées pour enjamber la jambe de sélection d'engrenage (9) ;
une première griffe (110) configurée pour fléchir au sein de la première branche (104) ;
une deuxième griffe (111) configurée pour fléchir au sein de la deuxième branche (105) ;
**caractérisée en ce que**
la paroi d'extrémité (101) est configurée pour bloquer le déplacement d'une jambe de sélection d'engrenage (9) ;
la première griffe (110) se termine en un premier ardillon ;
la deuxième griffe (111) se termine en un deuxième ardillon (113) ;
l'attache de maintien de jambe (100) comprenant en outre :
un premier pied (106) incliné par rapport à la première branche (104) et configuré pour s'opposer élastiquement au premier ardillon ; et
un deuxième pied (107) incliné par rapport à la deuxième branche (105) et configuré pour s'opposer élastiquement au deuxième ardillon (113).

2. Attache de maintien de jambe selon la revendication 1, comprenant en outre un rebord de guidage de jambe (103) traversant un périmètre interne de l'attache (100).

3. Synchroniseur (20, 30, 40) pour coupler au moins un engrenage (G1, G2) à un moyeu (5), comprenant :
un moyeu pouvant accueillir une jambe de sélection d'engrenage (9) dans une encoche de jambe (51), le moyeu (5) étant centré autour d'une ligne centrale (CL), la ligne centrale comprenant un point central (CP) en ligne avec la jambe de sélection d'engrenage (9), le moyeu (5) comprenant une paroi latérale synchronisée (529) sur un premier côté du point central et une paroi latérale non synchronisée (530) sur un deuxième côté du point central, et le moyeu (5) comprenant des dents externes (52) jouxtant l'encoche de jambe (51) ;
un manchon (2) entourant le moyeu (5), le manchon (2) configuré pour coulisser vers l'arrière et vers l'avant le long d'une première partie de la ligne centrale (CL) sur le premier côté du point central (CP), le manchon (2) comprenant des dents internes (21) configurées pour venir en prise avec les dents externes (52) du moyeu (5) ; et
une attache de maintien de jambe (100) couplée à la jambe de sélection d'engrenage (9), l'attache de maintien de jambe (100) comprenant
une paroi d'extrémité (101) sur le deuxième côté du point central près de la paroi latérale non synchronisée (530), la paroi d'extrémité configurée pour bloquer un déplacement de la jambe de sélection d'engrenage à travers la paroi latérale non synchronisée (530) ; une première branche (104) et une deuxième branche (105) s'étendant à partir de la paroi d'extrémité (101), la première branche et la deuxième branche enjambant la jambe de sélection d'engrenage (9) ; une première griffe (110) configurée pour fléchir au sein de la première branche (104), la première griffe (110) se termine en un premier ardillon ; une deuxième griffe (111) configurée pour fléchir au sein de la deuxième branche (105), la deuxième griffe (111) se termine en un deuxième ardillon (113) ;
un premier pied (106) incliné par rapport à la première branche (104) pour jouxter la paroi latérale synchronisée (529) ; et
un deuxième pied (107) incliné par rapport à la deuxième branche (105) pour jouxter la paroi latérale synchronisée (529).

4. Synchroniseur selon la revendication 3, dans lequel la première branche (104) comprend une première griffe à ardillon (110) configurée pour fléchir contre l'encoche de jambe, et dans lequel un premier ardillon sur la première griffe à ardillon jouxte la paroi latérale non synchronisée.

5. Synchroniseur selon la revendication 4, dans lequel la deuxième branche (105) comprend la deuxième griffe à ardillon (111) configurée pour fléchir contre l'encoche de jambe (51), et dans lequel le deuxième ardillon (113) sur la deuxième griffe à ardillon (111) jouxte la paroi latérale non synchronisée (530).

6. Synchroniseur selon la revendication 4, dans lequel la première griffe à ardillon (110) et le premier pied (106) sont configurés avec une force élastique pour saisir la paroi latérale synchronisée (529) et la paroi latérale non synchronisée (530).

7. Synchroniseur selon l'une quelconque des revendications 3 à 6, dans lequel l'attache de maintien de jambe (100) est configurée pour appliquer une force élastique dans l'encoche de jambe (51) comme par une flexion de la première branche (104) et de la deuxième branche (105) par rapport à la paroi d'extrémité (101).

8. Synchroniseur selon l'une quelconque des revendications 3 à 6, comprenant en outre un rebord de guidage de jambe (103) traversant un périmètre interne de l'attache de maintien de jambe (101).

9. Synchroniseur selon l'une quelconque des revendications 3 à 6, dans lequel la paroi d'extrémité (101) comprend des nervures internes (102).

10. Synchroniseur selon l'une quelconque des revendications 3 à 6, dans lequel l'attache de maintien de jambe (100) est polymère.

11. Synchroniseur selon l'une quelconque des revendications 3 à 6, dans lequel l'attache de maintien de jambe (100) est amovible.

12. Transmission comprenant le synchroniseur (20, 30, 40) selon la revendication 3, la transmission comprenant en outre :
une bague de blocage (3 ; 8) et un corps de crabot (4 ; 7) le long de la ligne centrale (CL) sur le deuxième côté du point central (CP) ; et
un engrenage (G1, G2) pour couplage au manchon (2) le long de la ligne centrale (CL) sur le premier côté du point central (CP).

13. Transmission selon la revendication 12, comprenant en outre :
une deuxième bague de blocage et un deuxième corps de crabot le long de la ligne centrale (CL) sur le premier côté du point central (CP) ; et un deuxième engrenage pour couplage au manchon (2) le long de la ligne centrale sur le deuxième côté du point central.

14. Transmission selon la revendication 12, dans laquelle l'attache de maintien de jambe (100) est positionnée entre le manchon (2) et la bague de blocage (3 ; 8).

15. Transmission selon la revendication 13, dans laquelle l'attache de maintien de jambe (100) est positionnée entre le manchon (2) et la deuxième bague de blocage.
